# EUROPÄISCHE PATENTSCHRIFT

(11) **EP 3 549 433 B1**
(45) Veröffentlichungstag und Bekanntmachung des Hinweises auf die Patenterteilung: **21.07.2021**
(21) Anmeldenummer: 19157403.7
(22) Anmeldetag: 15.02.2019
(51) Int. Cl.: A01D 41/14

(54) **HÖHENSTEUERUNGSSYSTEM FÜR EIN ERNTEVORSATZGERÄT**
HEIGHT CONTROL SYSTEM FOR A HARVESTING HEADER
SYSTÈME DE COMMANDE DE HAUTEUR POUR UN APPAREIL TÊTE DE RÉCOLTE

(30) Priorität: 03.04.2018 DE 102018107804
(43) Veröffentlichungstag der Anmeldung: 09.10.2019
(73) Patentinhaber: CLAAS Selbstfahrende Erntemaschinen GmbH, 33428 Harsewinkel (DE)
(72) Erfinder: Füchtling, Christian, 48317 Drenstein Rinkerode (DE); Wielenberg, Andreas, 32049 Herford (DE); Beschorn, Udo, 33428 Harsewinkel (DE); Hinz, Thomas, 33428 Harsewinkel (DE)
(74) Vertreter: CLAAS Gruppe

(56) Entgegenhaltungen:
- EP-A2- 3 087 819
- EP-B1- 2 695 511
- US-B2- 8 245 489

## Beschreibung

Die vorliegende Erfindung betrifft ein Höhensteuerungssystem für ein Erntevorsatzgerät gemäß dem Oberbegriff des Anspruches 1. Weiterhin betrifft die vorliegende Erfindung ein Verfahren zum Betreiben eines Erntevorsatzgerätes sowie eine selbstfahrende Erntemaschine.

Mittels eines Höhensteuerungssystem wird ein insbesondere als Schneidwerk ausgebildetes Erntevorsatzgerät mit einem bodenkopierenden Messerbalken über ein zu bearbeitendes Territorium bewegt, wobei der Messerbalken der Kontur des Bodens folgt. Hierzu ist der Messerbalken an einer Vielzahl von um zumindest eine horizontale Achse schwenkbarer Tragarme angeordnet, die an einem Rahmen des Erntevorsatzgerätes angelenkt sind. Dabei liegt der Messerbalken selbst auf dem zu kopierenden Boden auf, während der Rahmen des Erntevorsatzgerätes beabstandet zu dem Boden von einer selbstfahrenden Erntemaschine gehalten wird. Vor Beginn des Erntebetriebes wird eine Sollposition der Tragarme relativ zu dem Rahmen eingestellt, welche eine Auslenkung der Tragarme und des daran angeordneten Messerbalkens in im Wesentlichen vertikaler Richtung ermöglicht. Auf diese Weise kann jeder Tragarm eine Ausgleichbewegung aufgrund bestehender Unebenheiten des zu bearbeitenden Bodens, beispielsweise in Form einer Senke oder einer Erhebung, ausführen. Hierzu wird der Tragarm ausgehend von der voreingestellten Sollposition zwischen einer oberen Endlage, die eine Auslenkung der Tragarme in Richtung einer insbesondere als Haspel ausgeführten Erntegutannahmevorrichtung des Erntevorsatzgerätes begrenzt, und einer unteren Endlage, verschwenkt, wobei die obere Endlage einen ersten Abstand und die untere Endlage einen zweiten Abstand zu der Sollposition aufweisen. Die Auslenkung eines einzelnen Tragarmes bis zum Erreichen der oberen Endlage oder der unteren Endlage wirkt sich unterschiedlich auf die Beanspruchung des Erntevorsatzgerätes aus. Erreicht beispielsweise ein einzelner Tragarm aufgrund der Tiefe einer Senke die untere Endlage, so hat dies zur Folge, dass der Messerbalken dieses Tragarmes temporär ohne Bodenkontakt ist, während die hierzu benachbarten Abschnitte des Messerbalkens respektive die benachbarten Tragarme weiterhin vom Boden getragen werden. Hingegen führt eine Auslenkung eines einzelnen Tragarmes bis an den oberen Endanschlag durch eine Erhebung, deren Höhe über den ersten Abstand hinausgeht, dazu, dass dieser einzelne Tragarm beginnt, zunehmend das Gewicht des Erntevorsatzgerätes tragen zu müssen, was zu einer unkontrollierten Überlastung führen kann. Daher wird die Sollposition auf einen bevorzugten Wert eingestellt, welcher im Allgemeinen einer annähernd gleichmäßigen Aufteilung des ersten Abstand und des zweiten Abstands entspricht. Diese Aufteilung stellt sicher, dass der Messerbalken genügend Weg hat, um bei Unebenheiten nach oben ausweichen zu können, ohne dabei vorschnell Gefahr zu laufen, überbeansprucht zu werden. Neben der Bodenbeschaffenheit des zu bearbeitenden Territoriums wird die Auslenkung der Tragarme auch durch Betriebsbedingungen bestimmt, unter welchen das Erntevorsatzgerät von der Erntemaschine über das Territorium bewegt wird. So führen insbesondere hohe Fahrgeschwindigkeiten dazu, dass es zu einer starken Auslenkungen des Messerbalkens bzw. des Tragarmes oder der Tragarme in Richtung des oberen Endanschlages kommt.

Ein Höhensteuerungssystem für ein Schneidwerk der eingangs genannten Art ist aus der EP 2 695 511 B1 bekannt. Das Höhensteuerungssystem steuert dabei das Schneidwerks gemäß einem Algorithmus in Abhängigkeit von einem Höhensignal zur Einhaltung einer von einer Bedienperson voreingestellten Sollbewegungshöhe an.

Ausgehend vom vorstehend genannten Stand der Technik liegt der vorliegenden Erfindung die Aufgabe zugrunde, ein Höhensteuerungssystem für ein Erntevorsatzgerät der eingangs genannten Art sowie ein Verfahren zum Berteiben eines Höhensteuerungssystems bereitzustellen, welche sich durch eine verbesserte Ansteuerung der Sollposition auszeichnen.

Diese Aufgabe wird erfindungsgemäß durch ein Höhensteuerungssystem gemäß dem Anspruch 1 sowie ein Verfahren zum Betreiben eines Höhensteuerungssystem gemäß dem Anspruch 11 gelöst.

Vorteilhafte Weiterbildungen sind Gegenstand der Unteransprüche.

Gemäß dem Anspruch 1 wird ein Höhensteuerungssystem für ein Erntevorsatzgerät, insbesondere ein Bandschneidwerk, vorgeschlagen, welches einen Rahmen, zumindest eine Erntegutannahmevorrichtung und einen bodenkopierenden flexiblen Messerbalken umfasst. Der bodenkopierende Messerbalken ist an einer Vielzahl von um zumindest eine horizontale Achse schwenkbarer Tragarme angeordnet, die an dem Rahmen angelenkt sind. Damit der Messerbalken beim Bodenkopieren der Kontur des Bodens folgt, sind die Tragarme ausgehend von einer vor Beginn eines Erntebetriebs einzustellenden Sollposition zwischen einer oberen Endlage, die eine Auslenkung der Tragarme in Richtung der Haspel begrenzt, und einer unteren Endlage, verschwenkbar. Dabei weist die obere Endlage einen ersten Abstand und die untere Endlage einen zweiten Abstand zu der Sollposition auf. Zur Verbesserung der Ansteuerung der Sollposition ist erfindungsgemäß vorgesehen, dass die Sollposition im laufenden Erntebetrieb an sich ändernde Erntebedingungen und/oder Betriebsbedingungen in Abhängigkeit von einer Auslenkung des Messerbalkens anpassbar ist, um den ersten Abstand zu minimieren und den zweiten Abstand zu maximieren. Der Begriff Erntebedingungen umbeschreibt dabei vor allem die Bodenbeschaffenheit respektive die Bodenkontur des zu bearbeitenden Territoriums. Mittels des Höhensteuerungssystem lässt sich im laufenden Betrieb eine Anpassung der voreingestellten Sollposition durchführen, um durch eine Veränderung der Sollposition, d.h. ein Verringern des ersten Abstands, stärker auf einen kupierten Boden des zu bearbeitenden Territoriums reagieren zu können. Dabei steht im Vordergrund, dass bei der Anpassung der Sollposition ein etwaiges Auftreten einer Überlastung des Messerbalkens durch eine unkontrollierte, wiederholte Auslenkung in die obere Endlage vermieden wird.

Diese Anpassung der Sollposition kann autonom erfolgen, d.h. ohne ein zusätzliches Zutun einer Bedienperson. Die Bedienperson kann sich somit voll auf den Erntevorgang konzentrieren.

Vorzugsweise kann die Anpassung der Sollposition im laufenden Erntebetrieb zyklisch erfolgen. Die Bewegung des flexiblen Messerbalkens kann hierzu in bestimmten Zeitintervallen erfasst und die jeweilige Maximalauslenkung des Messerbalkens klassiert werden. Dadurch kann ermittelt werden, ob Überbeanspruchungen vorliegen bzw. ein Potenzial vorhanden ist, die Sollposition für mehr Flexibilität des Messerbalkens zu optimieren.

Insbesondere sollte der erste Abstand zwischen der Sollposition und der oberen Endlage umso größer gewählt werden, je größer die Auslenkung des Messerbalkens aufgrund von Bodenunebenheiten ist. Auf diese Weise wird der erste Abstand, der einen Sicherheitsbereich bildet, um eine unkontrollierte Überlastung des Messerbalkens zu vermeiden.

Gemäß einer bevorzugten Weiterbildung kann das Verhältnis des ersten Abstand und des zweiten Abstand zueinander bezogen auf die vor Beginn eines Erntebetriebs einzustellende Sollposition etwa 1:1 bis 1:1,5 betragen. So kann vor Beginn des Erntebetriebs zumindest ein im Wesentlichen gleicher erster und zweiter Abstand eingestellt, der auf einem zu bearbeitenden Territorium zunächst einen Kompromiss zwischen dem erforderlichen Sicherheitsabstand einerseits und der notwendigen Flexibilität anderseits darstellt.

Besonders bevorzugt kann der erste Abstand etwa 90 mm bis 115 mm betragen, der vor Beginn des Erntebetriebs eingestellt wird.

Mittels der erfindungsgemäßen Höhensteuerung kann der erste Abstand im laufenden Erntebetrieb bis auf etwa 40 mm reduzierbar sein. Der zweite Abstand zwischen der Sollposition und der unteren Endlage wird somit maximiert, was hinsichtlich der nutzbaren Flexibilität beim Durchfahren von Senken oder dergleichen des kupierten Bodens vorteilhaft ist. Dennoch bleibt eine ausreichende Sicherheit, um Schäden an dem Erntevorsatzgerät zu verhindern. Insbesondere durch die zyklische Anpassung der Sollposition wird eine kontinuierliche Überwachung der Anpassung vorgenommen, um von der Bedienperson unbemerkt auftretende Überlastungen zu vermeiden.

Insbesondere kann zur Erfassung der Auslenkung des Messerbalkens im laufenden Erntebetrieb zumindest eine Sensoranordnung an dem Erntevorsatzgerät angeordnet sein. Mittels der zumindest einen Sensoranordnung können Richtung und Grad der Auslenkung der Tragarme erfasst werden, welche beim Bodenkopieren auftritt. Denkbar ist, dass mehr als eine Sensoranordnung vorgesehen ist, insbesondere kann an jedem Tragarm eine Sensoranordnung angeordnet sein, welche zur Erfassung der jeweiligen Auslenkung des Tragarmes eingerichtet ist.

Bevorzugt kann die zumindest eine Sensoranordnung als zumindest eine drehbar in einer Lagerstelle gelagerte Welle ausgebildet sein, die sich zumindest abschnittsweise parallel zu dem Rahmen erstreckt, wobei die Welle durch jeweils eine Hebelanordnung mit dem jeweiligen Tragarm verbunden ist und dass die Welle mit zumindest einem Sensor zur Erfassung der von der Hebelanordnung auf die Welle übertragenen Drehbewegung verbunden ist. Der zumindest eine Sensor kann beispielsweise als berührungslos arbeitender Drehwinkelsensor oder als potentiometrischer Drehwinkelsensor ausgebildet sein.

Dabei kann an jeder Lagerstelle ein Art Freilauf vorgesehen sein, durch den eine Drehbewegung der Welle nur aufgrund einer Auslenkung des jeweiligen Tragarmes in Richtung des oberen Endanschlages übertragen wird. Hierzu kann die Hebelanordnung dazu ausgebildet sein, die Auslenkung des Tragarmes nur aufgrund einer Auslenkung in Richtung des oberen Endanschlages auf die Welle zu übertragen. Somit werden nur die Auslenkungen der Tragarme in Richtung des oberen Endanschlages erfasst, welche für den Betrieb des Schneidwerks kritisch sein können. Zudem kann somit auf einfache Weise die Größenordnung der zu verarbeitenden Signale reduziert werden.

Insbesondere kann dem Erntevorsatzgerät eine Steuerungsvorrichtung zugeordnet sein, welche zur Auswertung der von der zumindest einen Sensoranordnung erfassten Auslenkung und zur adaptierbaren Einstellung der Sollposition eingerichtet ist. Die Steuerungsvorrichtung umfasst eine Recheneinheit sowie eine Speichereinheit. Mittels der Steuerungsvorrichtung kann eine an dem jeweiligen Tragarm angeordnete Aktorik, insbesondere ein Hydraulikzylinder, angesteuert werden, mit der die Sollposition des Messerbalkens zu Beginn des Erntebetriebs initial einstellbar ist. Das Erntevorsatzgerät lässt sich in einen Betriebsmodus überführen, in welchem der Messerbalken mit einer von der Druckbeaufschlagung abhängigen anteiligen Gewichtskraft auf dem kupierten Boden aufliegt. Im laufenden Betrieb kann mittels der Steuerungsvorrichtung die Aktorik der Tragarme angesteuert werden, um die Sollposition des Messerbalkens durch eine Änderung des ersten Abstands zum oberen Endanschlag anzupassen. Die Steuerungsvorrichtung wertet die von der zumindest einen Sensoranordnung übertragenen Signale aus, um ein zeitabhängiges Profil der Auslenkung zu bestimmen. Bevorzugt kann nur das Signal herangezogen werden, welches der größten Auslenkung eines Tragarmes im Zeitpunkt der Messung entspricht. Hierdurch kann die Anzahl der Sensoren zur Erfassung der Drehbewegung der Welle minimiert werden, da lediglich die maximale Auslenkung der Tragarme erfasst werden soll. Die Bewegung des flexiblen Messerbalkens kann hierzu in bestimmten Zeitintervallen erfasst und die jeweilige Maximalauslenkung des Messerbalkens klassiert werden. Dadurch kann ermittelt werden, ob Überbeanspruchungen vorliegen bzw. ob ein Potenzial vorhanden ist, die Sollposition für mehr Flexibilität des Messerbalkens zu optimieren. Mittels der Steuerungsvorrichtung kann der laufende Betrieb des Erntevorsatzgerätes überwacht werden, so dass auf das Auftreten von Situationen, in denen es aufgrund der Bodenbeschaffenheit eine Auslenkung des Messerbalkens gegen den oberen Endanschlag kommen kann, durch eine Anpassung der Sollposition reagiert wird, indem der erste Abstand erforderlichenfalls vergrößert wird. Die Steuerungsvorrichtung kann bevorzugt unmittelbar an dem Erntevorsatzgerät angeordnet sein.

Des Weiteren wird die eingangs gestellte Aufgabe durch ein Verfahren zum Betreiben eines Höhensteuerungssystem für ein Erntevorsatzgerät mit den Merkmalen des Anspruches 11 gelöst.

Gemäß dem Anspruch 11 ist ein Verfahren zum Betreiben eines Höhensteuerungssystem für ein Erntevorsatzgerät, insbesondere ein Bandschneidwerk, vorgesehen, wobei das Erntevorsatzgerät einen Rahmen, zumindest eine Erntegutannahmevorrichtung und einen bodenkopierenden Messerbalken, welcher an einer Vielzahl von um zumindest eine horizontale Achse schwenkbarer Tragarme angeordnet ist, die an dem Rahmen angelenkt sind, umfasst, wobei die Tragarme im Erntebetrieb ausgehend von einer vor Beginn eines Erntebetriebs eingestellten Sollposition zwischen einer oberen Endlage, die eine Auslenkung der Tragarme in Richtung der Haspel begrenzt, und einer unteren Endlage verschwenkt werden, wobei die obere Endlage einen ersten Abstand und die untere Endlage einen zweiten Abstand zu der Sollposition aufweist. Erfindungsgemäß wird die Sollposition im laufenden Erntebetrieb an sich ändernde Erntebedingungen und/oder Betriebsbedingungen in Abhängigkeit von einer Auslenkung des Messerbalkens angepasst, um den ersten Abstand zu minimieren und den zweiten Abstand zu maximieren. Unter dem Begriff Betriebsbedingung wird vor allem die Fahrweise, insbesondere die Fahrgeschwindigkeit einer selbstfahrenden Erntemaschine verstanden, an der das Erntevorsatzgerät mit seinem bodenkopierenden Messerbalken angeordnet ist und die das Erntevorsatzgerät über den kupierten Boden führt. Das erfindungsgemäße Verfahren bietet die Möglichkeit, den ersten Abstand zwischen Sollposition und oberer Endlage zu minimieren, wenn die Voraussetzungen hierfür vorliegen. Das Betreiben des Erntevorsatzgerätes mit starren Einstellungen, wie es im Stand der Technik vorgesehen ist, wird durch das erfindungsgemäße Verfahren zugunsten einer flexiblen Anpassung der Sollposition ersetzt.

So kann die Auslenkung des Messerbalkens durch zumindest eine Sensoranordnung zyklisch erfasst und von einer Steuerungsvorrichtung ausgewertet werden, um in Abhängigkeit von der Auslenkung in Richtung der oberen Endlage den ersten Abstand der Sollposition zu minimieren. Somit bedarf es keiner aktiven Überwachung durch eine Bedienperson. So kann die Sollposition mittels der Steuerungsvorrichtung von der Bedienperson vor Beginn des Erntebetriebs initial vorgegeben werde, während im laufenden Erntebetrieb die Sollposition in Abhängigkeit von der jeweiligen Auslenkung des Messerbalkens, die von den Erntebedingungen und/oder Betriebsbedingungen hervorgerufen wird, zyklisch angepasst werden kann. Das Verfahren ermöglicht eine optimierte Einstellung der Sollposition, um eine größtmögliche Auslenkung in Richtung des unteren Endanschlages unter Vermeidung einer Überbelastung eines oder mehrerer Tragarme zu gewährleiten.

Hierzu kann der erste Abstand zu der Sollposition umso größer gewählt werden, je unebener das zu bearbeitende Territorium ist. Das Verfahren ermöglicht ein selbsttätiges Reagieren auf sich ändernde Erntebedingungen, um einen sicheren Betrieb des Schneidwerks zu gewährleisten.

Insbesondere kann anhand der erfassten Auslenkung auf einen Unebenheitsgrad eines zu bearbeitenden Territoriums geschlossen werden.

Weiterhin wird eine selbstfahrende Erntemaschine, insbesondere Mähdrescher, mit einem Erntevorsatzgerät beansprucht, wobei das Erntevorsatzgerät durch ein nach einem der Ansprüche 1 bis 10 ausgebildetes Höhensteuerungssystem ansteuerbar ist.

Die vorliegende Erfindung wird nachstehend anhand eines in den Zeichnungen dargestellten Ausführungsbeispieles näher erläutert.

Es zeigen:
- Fig. 1: eine schematische Ansicht eines Schneidwerkes;
- Fig. 2: eine Teilansicht eines Seitenabschnittes des Schneidwerkes gemäß Fig. 1;
- Fig. 3: eine teilweise freigeschnittene Ansicht eines Tragarmes des Schneidwerks;
- Fig. 4a: eine schematisierte Darstellung des Schneidwerks in einer Seitenansicht mit einer vor Beginn eines Erntebetriebs eingestellten Sollposition der Tragarme;
- Fig. 4b: eine schematisierte Darstellung des Schneidwerks in einer Seitenansicht mit einer während des Erntebetriebs angepassten Sollposition der Tragarme.

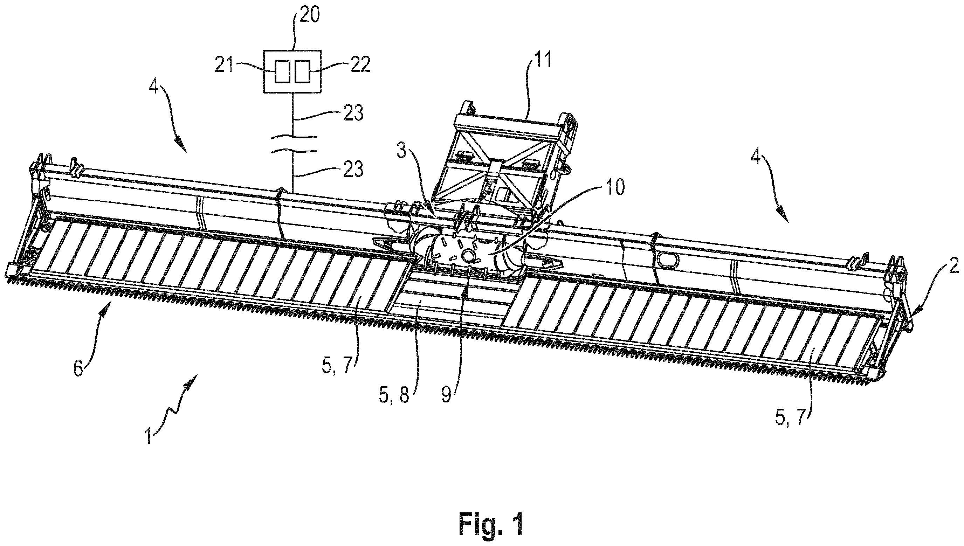

Die Darstellung in Fig. 1 zeigt eine schematische Darstellung eines als Schneidwerk 1 ausgebildeten Erntevorsatzgerätes. Das Schneidwerk 1 ist als Bandschneidwerk ausgebildet. Das Schneidwerk 1 weist einen Rahmen 2 auf, an welchem ein Mittenabschnitt 3 und mindestens zwei benachbart zu dem Mittenabschnitt 3 angeordnete Seitenabschnitte 4 angeordnet sind. An dem Mittenabschnitt 3 und den Seitenabschnitten 4 ist auf der dem Rahmen 2 gegenüberliegenden Vorderseite des Schneidwerkes 1 ein bodenkopierender Messerbalken 6 angeordnet, der sich im Wesentlichen über die gesamte Breite des Schneidwerkes 1 erstreckt. An dem Rahmen 2 des Schneidwerkes 1 sind (nicht dargestellte) als Haspeln ausgebildete Erntegutannahmevorrichtungen angeordnet, die sich im Wesentlichen über die Breite eines Seitenabschnittes 4 sowie teilweise über die Breite des Mittenabschnittes 3 erstrecken. Die Haspeln dienen der Verbesserung der Aufnahme des Erntegutes durch das Schneidwerk 1.

Das von dem Messerbalken 6 abgetrennte Erntegut wird einer hinter dem Messerbalken 6 angeordneten Fördervorrichtung 5 zugeführt, die auf den jeweiligen Seitenabschnitten 4 als mindestens ein endlos umlaufendes Band 7 ausgeführt ist, welches parallel zur Längsachse des Schneidwerks 1 umläuft. Die endlos umlaufenden Bänder 7 sind benachbart zu dem Mittenabschnitt 3 angeordnet, um von dem Messerbalken 6 abgeschnittenes Erntegut seitwärts in Richtung des Mittenabschnittes 3 zu transportieren und einer Einzugsvorrichtung 9 zuzuführen. Der Mittenabschnitt 3 umfasst ebenfalls eine als endlos umlaufendes Förderband 8 ausgebildete Fördervorrichtung 5. Andere Ausgestaltungen der Fördervorrichtung 5 im Bereich des Mittenabschnitts 3 sind denkbar. Die Einzugsvorrichtung 9 ist als eine antreibbare Einzugswalze 10 ausgeführt. Die Einzugsvorrichtung 9 führt das von den endlos umlaufenden Bändern 7 bzw. 8 dem Mittenabschnitt 3 seitlich zugeführte Erntegut einer in dem Rahmen 2 vorgesehenen, hinter der Einzugswalze 10 befindlichen Öffnung zu, durch welche das Erntegut durch einen an einem nicht dargestellten Mähdrescher befindlichen Einzugskanal 11, an dem das Schneidwerk 1 lösbar befestigt ist, dem Mähdrescher zur weiteren Verarbeitung zugeführt wird.

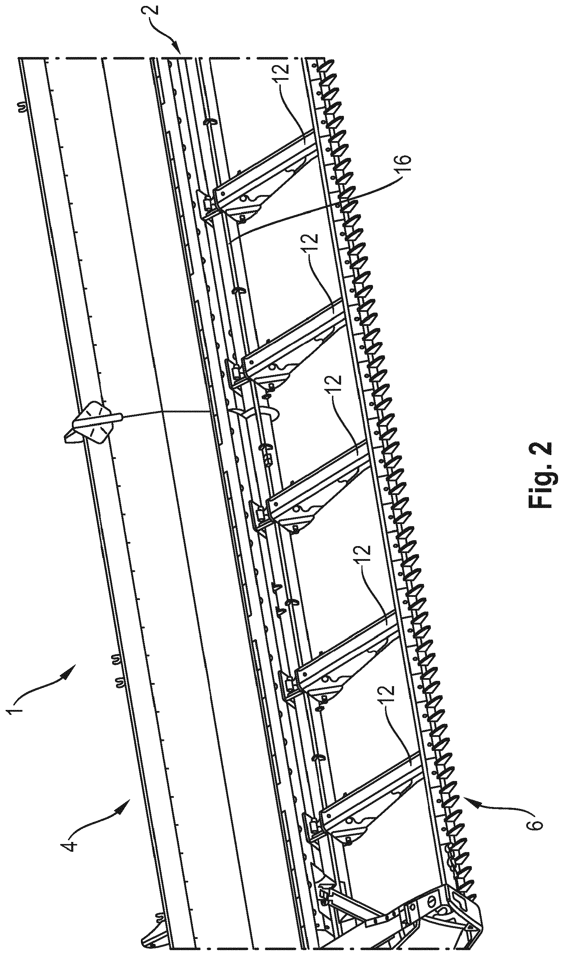

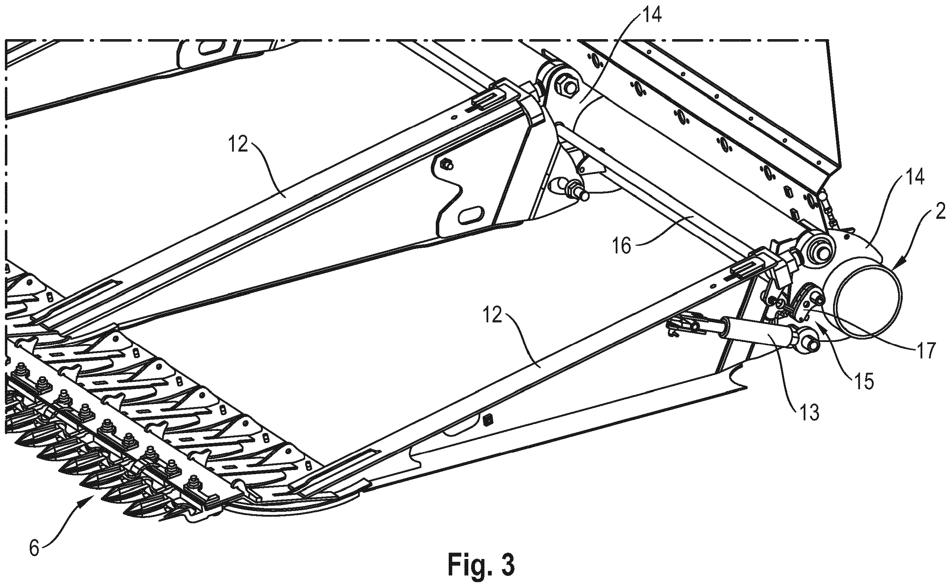

In Fig. 2 ist eine Teilansicht eines Seitenabschnittes 4 des Schneidwerkes 1 ohne das endlos umlaufende Förderband 7 gemäß Fig. 1 dargestellt. Die Seitenabschnitte 4 sind spiegelsymmetrisch ausgeführt, so dass die nachfolgende Beschreibung, soweit sie den dargestellten Seitenabschnitt 4 und daran angeordnete Komponenten betrifft, entsprechend auf den anderen Seitenabschnitt 4 übertagbar ist. Jeder Seitenabschnitt 4 weist eine Vielzahl von Tragarmen 12 auf, die schwenkbar an dem Rahmen 2 angelenkt sind. Über die Breite des Seitenabschnittes 4 erstreckt sich eine durchgehende Welle 16, welche ein Teil zumindest einer Sensoranordnung 15 ist, welche in Fig. 3 näher dargestellt ist.

Die Darstellung in Fig. 3 zeigt eine teilweise freigeschnittene Ansicht eines Tragarmes 12 des Schneidwerks 1. An dem Rahmen 2 sind die Tragarme 12 um eine horizontale Achse schwenkbar angelenkt. An den Tragarmen 12 ist der bodenkopierende Messerbalken 6 angeordnet. Jedem Tragarm 12 ist eine als Hydraulikzylinder 13 ausgeführte Aktorik zugeordnet, mit der der jeweilige Tragarm 12 in einem Betriebsmodus betreibbar ist, in welchem ein Kopieren eines kupierten Bodens durch den Messerbalken 6 ermöglicht wird. Hierzu werden die Hydraulikzylinder 13 derart mit einem hydraulischen Druck beaufschlagt, dass der Messerbalken 6 mit einer von der Druckbeaufschlagung abhängigen Gewichtskraft auf dem kupierten Boden aufliegt. Bei einer Änderung der Bodenkontur, welcher der Messerbalken 6 zumindest abschnittsweise folgt, erfahren die Tragarme 12 eine vertikale Auslenkung. Die vertikale Auslenkung wird mittels der Sensoranordnung 15 bestimmt.

Die Sensoranordnung 15 ist zur Erfassung der Schwenkbewegung der Tragarme 12 eingerichtet, welche von durch die vertikale Auslenkung des Messerbalkens 6 hervorgerufen wird, wenn das Schneidwerk 1 über den kupierten Boden geführt wird. Die Sensoranordnung 15 umfasst eine durchgehende Welle 16, welche sich im Wesentlichen über die gesamte Breite des jeweiligen Seitenabschnitts 4 erstreckt. Die Welle 16 ist in Konsolen 14, die jedem Tragarm 12 zugeordnet sind, drehbar gelagert. Weiterhin ist eine Hebelanordnung 17 vorgesehen, durch welche die Welle 16 mit dem jeweiligen Tragarm 12 verbunden ist. Die Hebelanordnung 17 dient dazu, die Auslenkung des Tragarmes 12 in vertikaler Richtung auf die Welle 16 in Form einer sensorisch erfassbaren Drehbewegung zu übertragen. Durch die Hebelanordnung 17 wird bei einer Lageänderung des Tragarmes 12 die Auslenkung des Tragarmes 12 in vertikaler Richtung auf die Welle 16 übertragen und in eine rotatorische Bewegung transformiert. Die größte vertikale Auslenkung eines Tragarmes 12 an einem Seitenabschnitt 4 resultiert in der stärksten Verdrehung der Welle 16. Die Welle 16 des Seitenabschnitts 4 ist mit zumindest einem - nicht dargestellten - Sensor verbunden, der zur Erfassung der von der Hebelanordnung 17 auf die Welle 16 übertragenen Drehbewegung eingerichtet ist. Bevorzugt ist der zumindest eine Sensor als potentiometrischer Sensor ausgeführt. Denkbar ist auch eine Ausführung des zumindest einen Sensors als ein berührungsloser Sensor, wie einem Hall-Effekt-Sensor.

Wie in Fig. 1 angedeutet, ist dem Schneidwerk 1 ein Steuerungsvorrichtung 20 zugeordnet, die unmittelbar an dem Schneidwerk 1 angeordnet sein kann oder an dem Mähdrescher. Die Steuerungsvorrichtung 20 umfasst eine Recheneinheit 21 sowie eine Speichereinheit 22. Die Steuerungsvorrichtung 21 ist durch eine Signalleitung 23 mit der Sensoranordnung 15 verbunden, um von dieser erfasste Signale empfangen und mittels Algorithmen, die in der Speichereinheit 22 hinterlegt sind, der Recheneinheit 21 auswerten zu können. Des Weiteren ist die Steuerungsvorrichtung 20 dazu eingerichtet, den hydraulischen Druck einzustellen, mit dem die Hydraulikzylinder 13 der Tragarme 12 beaufschlagt werden.

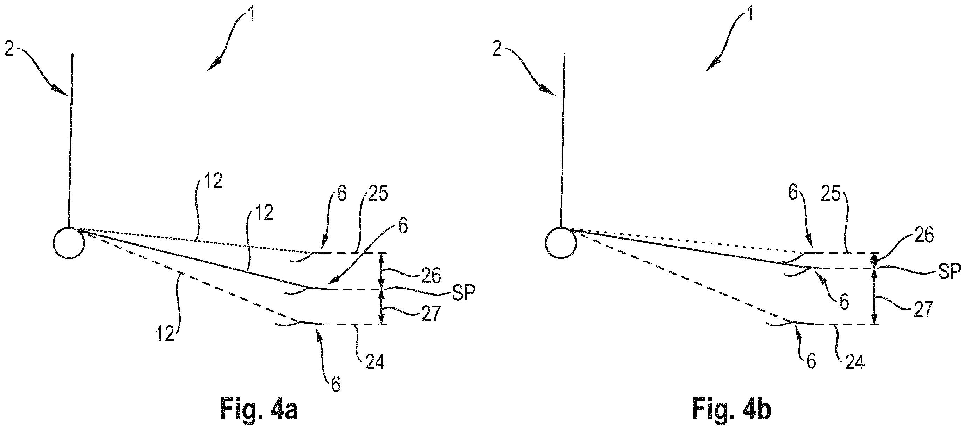

In den Fig. 4a ist eine schematisierte Darstellung des Schneidwerks 1 in einer Seitenansicht mit einer vor Beginn eines Erntebetriebs eingestellten Sollposition SP der Tragarme 12 dargestellt. Zu Beginn des Erntebetriebs wird die Sollposition SP des Schneidwerks 1 eingestellt. Durch die Einstellung der Sollposition SP werden ein erster Abstand 26 zu einem oberen Endanschlag 25 und ein zweiter Abstand 27 zu einem unteren Endanschlag 24 der Tragarme 12 festgelegt. Der untere Endanschlag 24 und der obere Endanschlag 25 begrenzen die maximal mögliche vertikale Auslenkung des jeweiligen Tragarmes 12 aufgrund von Bodenunebenheiten wie Erhebungen oder Senken, denen der bodenkopierende Messerbalken 6 im Wesentlichen folgt. Während Auslenkungen eines Tragarmes 12 in Richtung des unteren Endanschlags 24 hinsichtlich der Auftretenden Belastung vergleichsweise unkritisch sind, kann eine Auslenkung in Richtung des oberen Endanschlages 25 eine starke Belastung darstellen, der durch eine entsprechende Einstellung des ersten Abstands 26 zwischen der Sollposition SP und dem oberen Endanschlag 25 Rechnung getragen werden soll.

Bei einer Auslenkung eines Tragarmes 12 in Richtung des unteren Endanschlags 24 hängt oftmals nur ein Teil des Messerbalkens 6 nach unten durch, während die zu diesem benachbarten Tragarme 12 unverändert das Gewicht von Messerbalken 6, Tragarmen 12 sowie der Bänder 7 anteilig über den Boden abstützen können. Hingegen führt eine Auslenkung eines Tragarmes 12 in Richtung des oberen Endanschlags 25 aufgrund einer Erhebung, deren Höhe den ersten Abstand überschreitet, zu einer starken Belastung dieses Tragarmes 12, da dieser zunehmend das Gewicht des Rahmens 2 des Schneidwerks 1aufnehmen muss.

Für die initiale Einstellung der Sollposition SP beträgt das Verhältnis des ersten Abstandes 26 und des zweiten Abstandes 27 zueinander vor Beginn des Erntebetriebs etwa 1:1 bis etwa 1:1,5. Oftmals wird eine annähernd gleichmäßige Aufteilung des insgesamt zur Verfügung stehenden Verstellweges der Tragarme 12 in vertikaler Richtung vorgenommen, wie dies in Fig. 4a angedeutet ist. Dabei ist der Tragarm 12 mittels durchgezogener Linie in der Sollposition SP dargestellt. Die punktierte bzw. strichlinierte Darstellung des Tragarmes 12 zeigt diesen bei einer Auslenkung bis zum oberen Endanschlag 25 bzw. unteren Endanschlag 24. Besonders bevorzugt kann der erste Abstand 26 etwa 90 mm bis 115 mm betragen, der vor Beginn des Erntebetriebs eingestellt wird.

Um die Einstellung der Sollposition SP während des laufenden Erntebetriebs zu optimieren, ist vorgesehen, dass die Auslenkung der Tragarme 12 von der Steuerungsvorrichtung 20 zyklisch erfasst und ausgewertet wird. Hierbei werden die von der zumindest einen Sensoranordnung 15 eines jeden Seitenabschnitts 4 erfassten größten vertikalen Auslenkung eines Tragarmes 12 erfasst, um auf den Grad der Bodenunebenheit eines zu bearbeitenden Territoriums als eine Erntebedingung schließen zu können. Weiterhin kann in die Erfassung auch eine Betriebsbedingung, insbesondere Fahrweise und/oder Fahrgeschwindigkeit des Mähdreschers, einfließen, durch welche die Größenordnung und Häufigkeit der vertikalen Auslenkung beeinflusst wird.

Wird im Rahmen der zyklischen Auswertung der vertikalen Auslenkung der Tragarme 12 festgestellt, dass die Ernte- und/oder Betriebsbedingungen eine Anpassung der Einstellung der Sollposition SP erlauben, so wird von der Steuerungsvorrichtung 20 eine selbsttätige Änderung des ersten Abstands 26 durchgeführt. Dabei soll der erste Abstand 26 minimiert werden, um einen maximalen zweiten Abstand 27 bereitzustellen, um besser auf kupierten Boden reagieren zu können. Zudem kann auf Grundlage der Auswertung durch die Steuerungsvorrichtung 20, um das Auftreten von Überlastungen zu vermeiden, der erste Abstand 26 zwischen der oberen Endlage 25 und der Sollposition SP ausgehend von der initialen Einstellung umso größer gewählt werden, je unebener das zu bearbeitende Territorium ist.

Dadurch, dass die Steuerungsvorrichtung 20 für einen autonomen Betrieb eingerichtet ist, wird die Bedienperson des Mähdreschers von einer Überwachung des Schneidwerkes 1 entlastet. Die Steuerungsvorrichtung 20 optimiert selbsttätig die Einstellung der Sollposition SP unter Berücksichtigung von Ernte- und/oder Betriebsbedingungen. Neben einer Maximierung des zweiten Abstands 27 sorgt das erfindungsgemäße Verfahren dafür, dass ein ausreichender Sicherheitsabstand - der erste Abstand 26 - gewährleistet bleibt, um Überlastungen des Messerbalkens 6 aufgrund von unkontrollierten Auslenkungen zu vermeiden.

Die Darstellung in Fig. 4b zeigt eine schematisierte Darstellung des Schneidwerks 1 in einer Seitenansicht mit einer während des Erntebetriebs angepassten Sollposition SP der Tragarme 12. Durch die Anpassung der Sollposition SP ist der erste Abstand 26 minimiert worden, während der zweite Abstand 27 maximiert wurde. So kann der erste Abstand 26 im laufenden Erntebetrieb bis auf etwa 40 mm reduzierbar sein.

### Bezugszeichenliste

- 1: Schneidwerk
- 2: Hauptrahmen
- 3: Mittenabschnitt
- 4: Seitenabschnitt
- 5: Fördervorrichtung
- 6: Messerbalken
- 7: Band
- 8: Förderband
- 9: Einzugsvorrichtung
- 10: Einzugswalze
- 11: Einzugskanal
- 12: Tragarm
- 13: Hydraulikzylinder
- 14: Konsole
- 15: Sensoranordnung
- 16: Welle
- 17: Hebelanordnung

- 20: Steuerungsvorrichtung
- 21: Recheneinheit
- 22: Speichereinheit
- 23: Signalleitung
- 24: Untere Endlage
- 25: Obere Endlage
- 26: Erster Abstand
- 27: Zweiter Abstand
- SP: Sollposition

## Patentansprüche

1. Höhensteuerungssystem für ein Erntevorsatzgerät (1), umfassend einen Rahmen (2), zumindest eine Erntegutannahmevorrichtung und einen bodenkopierenden Messerbalken (6), welcher an einer Vielzahl von um zumindest eine horizontale Achse schwenkbarer Tragarme (12) angeordnet ist, die an dem Rahmen (2) angelenkt sind, wobei die Tragarme (12) ausgehend von einer vor Beginn eines Erntebetriebs einzustellenden Sollposition (SP) zwischen einer oberen Endlage (25), die eine Auslenkung der Tragarme (12) in Richtung der Erntegutannahmevorrichtung begrenzt, und einer unteren Endlage (24), verschwenkbar sind, wobei die obere Endlage (25) einen ersten Abstand (26) und die untere Endlage (24) einen zweiten Abstand (27) zu der Sollposition (SP) aufweist, **dadurch gekennzeichnet, dass** die Sollposition (SP) im laufenden Erntebetrieb an sich ändernde Erntebedingungen und/oder Betriebsbedingungen in Abhängigkeit von einer Auslenkung des Messerbalkens (6) angepasst wird, um den ersten Abstand (26) zu minimieren und den zweiten Abstand (27) zu maximieren.

2. Höhensteuerungssystem nach Anspruch 1, **dadurch gekennzeichnet, dass** die Anpassung der Sollposition (SP) im laufenden Erntebetrieb zyklisch erfolgt.

3. Höhensteuerungssystem nach einem der Ansprüche 1 oder 2, **dadurch gekennzeichnet, dass** der erste Abstand (26) zwischen der Sollposition (SP) und der oberen Endlage (25) umso größer gewählt wird, je größer die Auslenkung des Messerbalkens (6) aufgrund von Bodenunebenheiten ist.

4. Höhensteuerungssystem nach einem der Ansprüche 1 bis 3, **dadurch gekennzeichnet, dass** das Verhältnis des ersten Abstands (26) und des zweiten Abstands (27) zueinander bezogen auf die vor Beginn eines Erntebetriebs einzustellende Sollposition (SP) etwa 1:1 bis etwa 1:1,5 beträgt.

5. Höhensteuerungssystem nach Anspruch 4, **dadurch gekennzeichnet, dass** der erste Abstand (26) etwa 90 mm bis 115 mm beträgt.

6. Höhensteuerungssystem nach einem der vorangehenden Ansprüche, **dadurch gekennzeichnet, dass** der erste Abstand (26) im laufenden Erntebetrieb bis auf etwa 40 mm reduzierbar ist.

7. Höhensteuerungssystem nach einem der vorangehenden Ansprüche, **dadurch gekennzeichnet, dass** zur Erfassung der Auslenkung des Messerbalkens (6) im laufenden Erntebetrieb zumindest eine Sensoranordnung (15) an dem Erntevorsatzgerät (1) angeordnet ist.

8. Höhensteuerungssystem nach Anspruch 7, **dadurch gekennzeichnet, dass** die zumindest eine Sensoranordnung (15) als zumindest eine drehbar in einer Lagerstelle (14) gelagerte Welle (16) ausgebildet ist, die sich zumindest abschnittsweise parallel zu dem Rahmen (2) erstreckt, wobei die Welle (16) durch jeweils eine Hebelanordnung (17) mit dem jeweiligen Tragarm (12) verbunden ist und dass die Welle (16) mit zumindest einem Sensor zur Erfassung der von der Hebelanordnung (17) auf die Welle (16) übertragenen Bewegung verbunden ist.

9. Höhensteuerungssystem nach Anspruch 8, **dadurch gekennzeichnet, dass** an jeder Lagerstelle (14) eine Art Freilauf vorgesehen ist, durch den eine Drehung der Welle (16) nur aufgrund einer Auslenkung des jeweiligen Tragarmes (12) in Richtung des oberen Endanschlages (24) übertragen wird.

10. Höhensteuerungssystem nach einem der vorangehenden Ansprüche, **dadurch gekennzeichnet, dass** dem Erntevorsatzgerät (1) eine Steuerungsvorrichtung (20) zugeordnet ist, welche zur Auswertung der von der zumindest einen Sensoranordnung (15) erfassten Auslenkung und zur adaptierten Einstellung der Sollposition (SP) eingerichtet ist.

11. Verfahren zum Betreiben eines Höhensteuerungssystem für ein Erntevorsatzgerät (1), wobei das Erntevorsatzgerät (1) einen Rahmen (2), zumindest einer Erntegutannahmevorrichtung und einen bodenkopierenden Messerbalken (6), welcher an einer Vielzahl von um zumindest eine horizontale Achse schwenkbarer Tragarme (12) angeordnet ist, die an dem Rahmen (2) angelenkt sind, umfasst, wobei die Tragarme (12) im Erntebetrieb ausgehend von einer vor Beginn eines Erntebetriebs eingestellten Sollposition (SP) zwischen einer oberen Endlage (25), die eine Auslenkung der Tragarme (12) in Richtung der Erntegutannahmevorrichtung begrenzt, und einer unteren Endlage (24) verschwenkt werden, wobei die obere Endlage (25) einen ersten Abstand (26) und die untere Endlage (24) einen zweiten Abstand (27) zu der Sollposition (SP) aufweist, **dadurch gekennzeichnet, dass** die Sollposition (SP) im laufenden Erntebetrieb an sich ändernde Erntebedingungen und/oder Betriebsbedingungen in Abhängigkeit von einer Auslenkung des Messerbalkens (6) optimal angepasst wird, um den ersten Abstand (26) zu minimieren und den zweiten Abstand (27) zu maximieren.

12. Verfahren nach Anspruch 11, **dadurch gekennzeichnet, dass** die Auslenkung des Messerbalkens (6) durch zumindest eine Sensoranordnung (15) zyklisch erfasst und von einer Steuerungsvorrichtung (20) ausgewertet wird, um in Abhängigkeit von der Auslenkung in Richtung der oberen Endlage (25) den ersten Abstand (26) zu der Sollposition (SP) zu minimieren.

13. Verfahren nach Anspruch 11 oder 12, **dadurch gekennzeichnet, dass** der erste Abstand (26) zwischen dem oberen Endanschlag (25) und der Sollposition (SP) umso größer gewählt wird, je unebener ein zu bearbeitende Territorium ist.

14. Verfahren nach einem der Ansprüche 11 bis 13, **dadurch gekennzeichnet, dass** anhand der erfassten Auslenkung auf einen Unebenheitsgrad eines zu bearbeitenden Territoriums geschlossen wird.

15. Selbstfahrende Erntemaschine, insbesondere Mähdrescher, mit einem Erntevorsatzgerät (1), welches von einem nach einem der Ansprüche 1 bis 10 ausgebildeten Höhensteuerungssystem angesteuert wird.

## Claims

1. A height control system for a front-mounted harvesting attachment (1) including a frame (2), at least one crop pick-up device and a ground-conforming cutter bar (6) which is arranged at a plurality of carrier arms (12) which are pivotable about at least a horizontal axis and which are pivotably mounted to the frame (2), wherein the carrier arms (12) are pivotable from a target position (SP) to be set before the beginning of a harvesting operation between an upper end position (25) which delimits deflection of the carrier arms (12) in the direction of the crop pick-up device and a lower end position (24), wherein the upper end position (25) is at a first spacing (26) ad the lower end position (24) is at a second spacing (27) relative to the target position (SP), **characterised in that** the target position (SP) is adapted in the ongoing harvesting operation to changing harvesting conditions and/or operating conditions in dependence on a deflection of the cutter bar (6) to minimise the first spacing (26) and maximise the second spacing (27).

2. A height control system according to claim 1 **characterised in that** adaptation of the target position (SP) is effected cyclically in the ongoing harvesting operation.

3. A height control system according to one of claims 1 and 2 **characterised in that** the first spacing (26) between the target position (SP) and the upper end position (25) is selected to be correspondingly greater, the greater the deflection of the cutter bar (6) because of ground unevenness.

4. A height control system according to one of claims 1 to 3 **characterised in that** the ratio of the first spacing (26) and the second spacing (27) to each other in relation to the target position (SP) which is to be set before the beginning of a harvesting operation is about 1:1 to about 1:1.5.

5. A height control system according to claim 4 **characterised in that** the first spacing (26) is about 90 mm to 115 mm.

6. A height control system according to one of the preceding claims **characterised in that** the first spacing (26) can be reduced in the ongoing harvesting operation to about 40 mm.

7. A height control system according to one of the preceding claims **characterised in that** at least one sensor arrangement (15) is arranged on the front-mounted harvesting attachment (1) to detect the deflection of the cutter bar (6) in the ongoing harvesting operation.

8. A height control system according to claim 7 **characterised in that** the at least one sensor arrangement (15) is in the form of at least one shaft (16) mounted rotatably in a bearing location (14) and which extends at least portion-wise parallel to the frame (2), wherein the shaft (16) is connected to the respective carrier arm (12) by a respective lever arrangement (17) and the shaft (16) is connected to at least one sensor for detection of the movement transmitted from the lever arrangement (17) to the shaft (16).

9. A height control system according to claim 8 **characterised in that** provided at each bearing location (14) is a kind of freewheel, by which a rotation of the shaft (16) is only transmitted by virtue of a deflection of the respective carrier arm (12) in the direction of the upper end abutment (24).

10. A height control system according to one of the preceding claims **characterised in that** associated with the front-mounted harvesting attachment (1) is a control device (20) which is adapted for evaluation of the deflection detected by the at least one sensor arrangement (15) and for adapted setting of the target position (SP).

11. A method of operating a height control system for a front-mounted harvesting attachment (1), wherein the front-mounted harvesting attachment (1) includes a frame (2), at least one crop pick-up device and a ground-conforming cutter bar (6) which is arranged at a plurality of carrier arms (12) which are pivotable about at least a horizontal axis and which are pivotably mounted to the frame (2), wherein the carrier arms (12) in the harvesting operation are pivotable from a target position (SP) set before the beginning of a harvesting operation between an upper end position (25) which delimits deflection of the carrier arms (12) in the direction of the crop pick-up device and a lower end position (24), wherein the upper end position (25) is at a first spacing (26) and the lower end position (24) is at a second spacing (27) relative to the target position (SP), **characterised in that** the target position (SP) is optimally adapted in the ongoing harvesting operation to changing harvesting conditions and/or operating conditions in dependence on a deflection of the cutter bar (6) to minimise the first spacing (26) and maximise the second spacing (27).

12. A method according to claim 11 **characterised in that** the deflection of the cutter bar (6) is cyclically detected by at least one sensor arrangement (15) and is evaluated by a control device (20) to minimise the first spacing (26) relative to the target position (SP) in dependence on the deflection in the direction of the upper end position (25).

13. A method according to claim 11 or claim 12 **characterised in that** the first spacing (26) between the upper end abutment (25) and the target position (SP) is selected to be correspondingly greater, the more uneven a territory to be worked is.

14. A method according to one of claims 11 to 13 **characterised in that** a degree of unevenness of a territory to be worked is inferred on the basis of the detected deflection.

15. A self-propelled harvester, in particular a combine harvester, comprising a front-mounted harvesting attachment (1) which is controlled by a height control system designed according to one of claims 1 to 10.

## Revendications

1. Système de commande de hauteur pour un outil frontal de récolte (1), incluant un bâti (2), au moins un dispositif de réception de produit récolté et une barre porte-lames à suivi de sol (6), laquelle est disposée sur une pluralité de bras porteurs (12) qui sont pivotants autour d'au moins un axe horizontal et sont articulés sur le bâti (2), les bras porteurs (12) pouvant pivoter à partir d'une position de consigne (SP), à établir avant le début d'un mode de récolte, entre une position extrême haute (25) qui limite une déviation des bras porteurs (12) en direction du dispositif de réception de produit récolté, et une position extrême basse (24), la position extrême haute (25) présentant une première distance (26) et la position extrême basse (24) une seconde distance (27) par rapport à la position de consigne (SP), **caractérisé en ce que** la position de consigne (SP) est adaptée, en cours de récolte, à des conditions de récolte et/ou des conditions de fonctionnement changeantes en fonction d'une déviation de la barre porte-lames (6) afin de minimaliser la première distance (26) et de maximaliser la seconde distance (27).

2. Système de commande de hauteur selon la revendication 1, **caractérisé en ce que** l'adaptation de la position de consigne (SP) en cours de récolte s'effectue cycliquement.

3. Système de commande de hauteur selon une des revendications 1 ou 2, **caractérisé en ce que** la première distance (26) entre la position de consigne (SP) et la position extrême haute (25) est choisie d'autant plus grande que la déviation de la barre porte-lames (6) due aux irrégularités du sol est grande.

4. Système de commande de hauteur selon une des revendications 1 à 3, **caractérisé en ce que** le rapport mutuel de la première distance (26) et de la seconde distance (27) par rapport à la position de consigne (SP) à établir avant le début d'un mode de récolte est égal à environ 1:1 à environ 1:1,5.

5. Système de commande de hauteur selon la revendication 4, **caractérisé en ce que** la première distance (26) est égale à environ 90 mm à 115 mm.

6. Système de commande de hauteur selon une des revendications précédentes, **caractérisé en ce que**, en cours de récolte, la première distance (26) peut être réduite jusqu'à environ 40 mm.

7. Système de commande de hauteur selon une des revendications précédentes, **caractérisé en ce que**, pour détecter la déviation de la barre porte-lames (6) en cours de récolte, au moins un agencement de capteur (15) est disposé sur l'outil frontal de récolte (1).

8. Système de commande de hauteur selon la revendication 7, **caractérisé en ce que** le au moins un agencement de capteur (15) est conformé en au moins un arbre (16) qui est monté rotatif dans un point d'appui (14) et qui s'étend au moins par endroits parallèlement au bâti (2), l'arbre (16) étant relié au bras porteur respectif (12) par l'intermédiaire respectivement d'un agencement de levier (17), et **en ce que** l'arbre (16) est relié à au moins un capteur pour détecter le mouvement transmis à l'arbre (16) par l'agencement de levier (17).

9. Système de commande de hauteur selon la revendication 8, **caractérisé en ce que** sur chaque point d'appui (14) est prévu une sorte de dispositif de course libre par l'intermédiaire duquel une rotation de l'arbre (16) n'est transmise que sous l'effet d'une déviation du bras porteur respectif (12) en direction de la butée d'extrémité haute (24).

10. Système de commande de hauteur selon une des revendications précédentes, **caractérisé en ce qu'**à l'outil frontal de récolte (1) est associé un dispositif de commande (20) qui est agencé pour analyser la déviation détectée par le au moins un agencement de capteur (15) et pour régler la position de consigne (SP) de manière adaptée.

11. Procédé de fonctionnement d'un système de commande de hauteur pour un outil frontal de récolte (1), l'outil frontal de récolte (1) incluant un bâti (2), au moins un dispositif de réception de produit récolté et une barre porte-lames à suivi de sol (6), laquelle est disposée sur une pluralité de bras porteurs (12) qui sont pivotants autour d'au moins un axe horizontal et sont articulés sur le bâti (2), les bras porteurs (12) étant, en mode de récolte, pivotés à partir d'une position de consigne (SP), établie avant le début d'un mode de récolte, entre une position extrême haute (25) qui limite une déviation des bras porteurs (12) en direction du dispositif de réception de produit récolté, et une position extrême basse (24), la position extrême haute (25) présentant une première distance (26) et la position extrême basse (24) une seconde distance (27) par rapport à la position de consigne (SP), **caractérisé en ce que** la position de consigne (SP) est adaptée, en cours de récolte, à des conditions de récolte et/ou des conditions de fonctionnement changeantes en fonction d'une déviation de la barre porte-lames (6) afin de minimaliser la première distance (26) et de maximaliser la seconde distance (27).

12. Procédé selon la revendication 11, **caractérisé en ce que** la déviation de la barre porte-lames (6) est détectée cycliquement par l'intermédiaire d'au moins un agencement de capteur (15) et est analysée par un dispositif de commande (20) afin de minimaliser la première distance (26) par rapport à la position de consigne (SP) en fonction de la déviation en direction de la position extrême haute (25).

13. Procédé selon la revendication 11 ou 12, **caractérisé en ce que** la première distance (26) entre la butée d'extrémité haute (25) et la position de consigne (SP) est choisie d'autant plus grande qu'un terrain à travailler est irrégulier.

14. Procédé selon une des revendications 11 à 13, **caractérisé en ce qu'**un degré d'irrégularité d'un terrain à travailler est déduit à partir de la déviation détectée.

15. Machine de récolte automotrice, en particulier moissonneuse-batteuse, comprenant un outil frontal de récolte (1) qui est commandé par un système de commande de hauteur conçu selon une des revendications 1 à 10.
